# EUROPEAN PATENT APPLICATION

(11) **EP 2 237 500 A1**
(43) Date of publication of application: **06.10.2010**
(21) Application number: 08870789.8
(22) Date of filing: 26.12.2008
(51) Int. Cl.: H04L 12/56

(54) **A ROUTE TABLE LOOKUP SYSTEM, TERNARY CONTENT ADDRESSABLE MEMORY AND NETWORK PROCESSOR**

(30) Priority: 28.12.2007 CN 200710305688
(71) Applicant: Huawei Technologies Co., Ltd., Longgang District, Shenzhen Guangdong 518129 (CN)
(72) Inventor: XIA, Hongbo, Guangdong 518129 (CN); YANG, Yong, Guangdong 518129 (CN); GAO, Fengming, Guangdong 518129 (CN)
(74) Representative: Barth, Stephan Manuel
(86) International application number: PCT/CN2008/073771
(87) International publication number: WO 2009/089744

(57) **Abstract**

A route lookup system, a TCAM, and an NP are disclosed. A TCAM includes a high-speed serial interface, wherein the TCAM transmits signals through the high-speed serial interface. The embodiments of the present invention increase the data transmission rate, reduce the number of signal lines, simplify the PCB design, reduce the chip size, and facilitate PCB wiring. Moreover, the small number of signal lines leads to decrease of required I/O pins, and reduces the packaging size of the chip.

## Description

This application claims priority to Chinese Patent Application No. 200710305688.4, filed with the Chinese Patent Office on December 28, 2007 and entitled "Route Lookup System, Ternary Content Addressable Memory, and Network Processor", which is hereby incorporated by reference in its entirety.

### FIELD OF THE INVENTION

The present invention relates to digital communication technologies, and in particular, to a route lookup system, a Ternary Content Addressable Memory (TCAM), and a Network Processor (NP).

### BACKGROUND

The route lookup system applied in digital communication includes a TCAM and an NP. TCAM is a new member of the Content Addressable Memory (CAM) family. Generally, the CAM is an associative memory based on the traditional storage technology. It accesses the content according to the feature of the given content rather than addresses. Generally, each bit in the CAM is in either a "0" state or a "1" state, but each bit in the TCAM has a third state "don't care" in addition to "0" and "1". Therefore, TCAM is a ternary (three-state) content addressable memory.

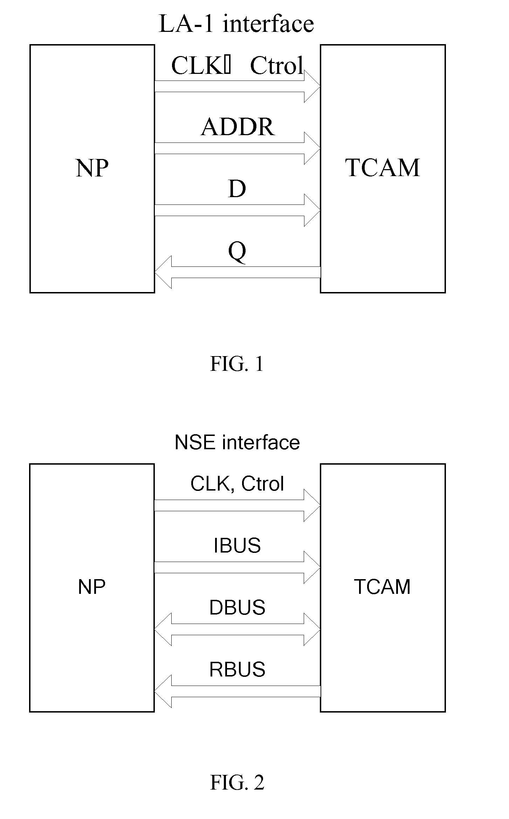

In the prior art, signals are exchanged between the TCAM and the NP through a physical interface based on a Qual Data Rate (QDR) Static Read Only Memory (SRAM) (which is also known as an LA-1 interface in the industry) or through a Network Search Engine (NSE) interface. The two interfaces in the prior art are parallel interfaces, and employ many signal lines. The LA-1 interface employs about 70 signal lines, and an NSE interface employs about 110 signal lines. In an example of using an LA-1 interface, as shown in FIG. 1, there are 24 address signal lines (ADDR), 18 write-data signal lines (D), 18 read-data signal lines (Q), and 2 clock signal lines (CLK). Allowing for the control signal lines (Ctrol) and conventional power lines, the total number of signal lines is more than 70. In an example of using an NSE interface, as shown in FIG. 2, there are 8 instruction buses (IBUS), 72 data signal lines (DBUS), 25 result returning buses (RBUS), and 2 clock signal lines (CLK). Allowing for the control signal lines (Ctrol) and conventional power lines, the total number of signal lines is more than 110.

It is well known in this field that the large number of signal lines is not conducive to design of Printed Circuit Boards (PCBs), and leads to the large size of chips (such as TCAM chips, NP chips, and chips which integrate the TCAM and the NP) and difficulty of PCB wiring.

### SUMMARY

The embodiments of the present invention provide a route lookup system, a TCAM, and an NP to overcome PCB design inconvenience caused by too many signal lines when the LA-1 interface or NSE interface is applied in the prior art.

The objectives of the present invention are fulfilled through the following technical solution.

A TCAM 31 is provided in an embodiment of the present invention. The TCAM 31 transmits signals through a high-speed serial interface.

An NP 32 is provided in an embodiment of the present invention. The NP 32 transmits signals through a high-speed serial interface.

A route lookup system is provided in an embodiment of the present invention. The route lookup system includes the TCAM 31 and the NP 32 mentioned above, and signals are transmitted between the TCAM 31 and the NP 32 through a high-speed serial interface.

In the technical solution under the present invention, signals are transmitted between the TCAM 31 and the NP 32 through a high-speed serial interface to improve the data transmission rate. With decrease of the number of interface bits, the number of signal lines required decreases. The small number of signal lines is conducive to PCB design, reduces the chip size, and facilitates PCB wiring. Moreover, the small number of signal lines leads to decrease of Input/Output (I/O) pins of the TCAM 31 and the NP 32, and reduces the packaging size of the chip. The increase of the interface rate is conducive to improving bandwidth.

### BRIEF DESCRIPTION OF THE DRAWINGS

FIG. 1 is a block diagram of a route lookup system with a physical interface based on QDR SRAM in the prior art;
FIG. 2 is a block diagram of a route lookup system with an NSE interface in the prior art;
FIG. 3 is a block diagram of a route lookup system in an embodiment of the present invention;
FIG. 4 is a schematic diagram of signal conversion in the direction from NP to TCAM in an embodiment of the present invention; and
FIG. 5 is a schematic diagram of signal conversion in the direction from TCAM to NP in an embodiment of the present invention.

### DETAILED DESCRIPTION OF THE EMBODIMENTS

In order to make the technical solution under the present invention clearer to those skilled in the art, the following describes the technical solution under the present invention in more detail with reference to accompanying drawings and preferred embodiments.

Described below is a route lookup system in an embodiment of the present invention.

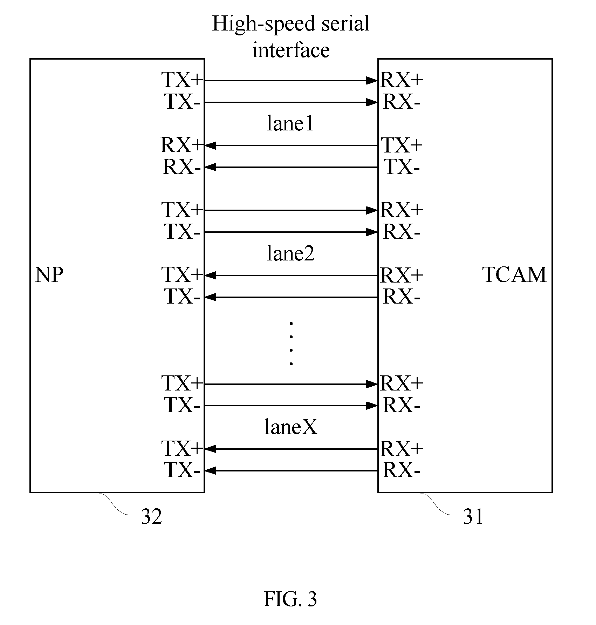

FIG. 3 is a block diagram of the route lookup system. As shown in FIG. 3, the route lookup system includes a TCAM 31 and an NP 32. Signals are transmitted between the TCAM 31 and the NP 32 through a high-speed serial interface.

It is known in this field that the interface bandwidth is in proportion to both the interface rate and the number of interface bits. If the interface bandwidth is constant, the interface rate (namely, interface frequency) is in inverse proportion to the number of interface bits. Meanwhile, the number of interface bits is in proportion to the number of signal lines. With the serial TCAM interface, the data transmission rate may be very high. With the interface bandwidth being constant, the number of interface bits decreases, and the number of the interface signal lines decreases. The small number of signal lines is conducive to PCB design, reduces the chip size, and facilitates PCB wiring. The increase of the interface rate is conducive to improving bandwidth.

Specifically, a parallel-to-serial converter is designed on the output end of the TCAM chip interface, and a serial-to-parallel converter is designed on the input end side. In this way, serial signals can be transmitted on the signal line. Accordingly, a parallel-to-serial converter and a serial-to-parallel converter are designed on the NP 32.

The high-speed serial interface may include several lanes (as shown in FIG. 3, X planes ranging from lane 1 to lane X), and each lane sends and receives differential signals independently. One lane includes four signal lines, and each signal line sends and receives a pair of differential signals.

Those skilled in the art know that TX+ to RX+ and TX- to RX- above lane 1 in FIG. 3 is a pair of differential signals. The foregoing differential signal pair may employ high-speed logic level technologies in the chip design as required. The high-speed level technologies include Low Voltage Differential Signaling (LVDS), Low Voltage Positive Emitter Coupled Logic (LVPECL), and Current Mode Logic (CML) level. A resistor is integrated inside the chip to match signals. For example, a 100 ohm resistor is integrated in the chip to match signals, which simplifies the PCB design.

The data transmission of the serial TCAM interface may be based on a proper coding method such as 8b/10b. In order to be adaptable to the coding method applied, the chip needs to provide the coding and decoding functions additionally so that a bit stream has enough conversions from 0 to 1 and enough conversions from 1 to 0. In this way, for any digital sequence, bit 0s and bit 1s are generated in a relatively balanced mode. For a Phase-Locked Loop (PLL) used for receiving signals on the input end, such coding and decoding functions avoid PLL out-of-lock, which is caused by receiving of a long string of bit 0s or bit 1s. To put it simply, such coding and decoding functions added in the chip enable fulfillment of Direct Current (DC) balance.

The prior art employs either an LA-1 interface or an NSE interface. It is impossible to increase the interface frequency due to signal integrity, due to quality of the signal on the signal line. Specifically, high-frequency signals are more vulnerable to interference from interfering signals. Therefore, when the signal frequency on the signal line increases, the signal quality decreases, and does not fulfill the requirement of signal transmission. Meanwhile, high-frequency signals generate interference to other signals, and deteriorate the quality of signals on other signal lines. Moreover, the large number of signal lines increases the I/O pins of the TCAM 31 and the NP 32, which makes it impossible to reduce the packaging size of the chip.

Therefore, the clock may be embedded in the data stream on the high-speed serial interface for transmission, and the receiving clock is re-built on the receiving device. Specifically, the clock is embedded in the data stream sent from the output end, and the input end re-builds a receiving clock upon the received data stream. Subsequently, the input end uses the recovered clock to sample data. In this way, no particular clock line is required for transmitting clock signals, which simplifies the PCB design.

The number of lanes used by the high-speed serial interface of the TCAM chip is configurable flexibly. According to the required bandwidth, the proper number of lanes (X) is selected, for example, one lane or two lanes. The high-speed serial interface of the TCAM chip is capable of adjusting the clock frequency. With the number of lanes being constant, the clock multiplication ratio and/or frequency division ratio of the internal PLL may be adjusted to implement different interface frequencies and fulfill different bandwidth requirements. With the required bandwidth being constant, the required number of lanes X may be decreased through increase of the interface clock frequency. In this way, the number of signal lines decreases.

For a bidirectional data lane, for example, lane 1 to lane X in FIG. 3, two pairs of unidirectional differential signal lines in opposite directions may constitute a logical lane (namely, 4 lines of a lane, for example, 4 lines of a lane in FIG. 3), which implements data exchange between the TCAM and the NP 32. A chip supports bundling of two or more logical lanes to increase the interface bandwidth. The bundling here is logical bundling. The chip implements bundling and unbundling of the logical lane through a dedicated register configured inside the chip. Further, a timestamp is added into the data transmitted through the high-speed data interface to solve data disorder and reduce the equal-length wiring requirements for differential signals, which further simplifies the PCB design. Specifically, lane management and data control are implemented through more added data headers. The timestamp may be implemented through several bits of the data header. For example, 2 bits may overcome disorder of the 4 packets, and 4 bits overcome disorder of 16 packets. With more bits in use, the effective bandwidth of the lane is narrower, but the control function of the lane and the data is more powerful, which involves a trade-off. For a unidirectional data lane or unidirectional control lane, only one pair of differential signal lines is used to constitute a logical unidirectional lane for transmitting unidirectional data signals or control commands, or two or more logical unidirectional lanes are bundled to increase the bandwidth as required. If the required bandwidth of the control signal is narrow, for example, the highest rate of the control signal is only several 100Mbps, only one pair of differential signal lines is enough, and it is not necessary to bundle multiple lanes. In this way, the designer can configure bundling of logical lanes flexibly as required.

As described in the foregoing embodiment, signals are transmitted between the TCAM 31 and the NP 32 through a high-speed serial interface to improve the data transmission rate. With decrease of the number of interface bits, the number of signal lines decreases. The small number of signal lines is conducive to PCB design, reduces the chip size, and facilitates PCB wiring. Moreover, the small number of signal lines leads to decrease of I/O pins of the TCAM 31 and the NP 32, and reduces the packaging size of the chip. The increase of the interface rate is conducive to improving bandwidth, and logical lanes can be bundled flexibly as required.

Described below is a TCAM 31 provided in an embodiment of the present invention.

As shown in FIG. 3, the TCAM 31 transmits signals through a high-speed serial interface. As mentioned above, through the serial interface, the data transmission rate may be very high, and the number of interface signal lines may decrease. The small number of signal lines is conducive to PCB design, reduces the chip size, and facilitates PCB wiring. The increase of the interface rate is conducive to improving bandwidth.

Specifically, a parallel-to-serial converter is designed on the output end of the TCAM chip interface module, and a serial-to-parallel converter is designed on the input end. In this way, serial signals can be transmitted on the signal line.

The high-speed serial interface may include several lanes (as shown in FIG. 3, X planes ranging from lane 1 to lane X), and each lane sends and receives differential signals independently. One lane includes four signal lines, and each signal line sends and receives a pair of differential signals.

The data transmission through the serial TCAM interface may adopt a proper coding method such as 8b/10b.

Further, the clock may be embedded in the data stream sent by the output end, and the input end re-builds the receiving clock. Specifically, the clock may be embedded in the data stream sent from the output end, and the input end re-builds the receiving clock upon the received data stream. In this way, no dedicated clock line is required for transmitting clock signals, which simplifies the PCB design.

The serial interface of the TCAM chip is capable of adjusting interface frequency. The user may configure the interface frequency flexibly as required, and select the number of lanes (X) applied. Especially, when the number of lanes (X) applied is small, the number of signal lines is further decreased.

For a bidirectional data lane, for example, lane 1 to lane X in FIG. 3, two pairs of unidirectional differential signal lines may constitute a logical lane, which implements data exchange between the TCAM and the NP 32. A chip supports bundling of multiple logical lanes to increase the interface bandwidth. Further, a timestamp is added into the data to solve data disorder and reduce the equal-length wiring requirements for differential signals, which further simplifies the PCB design. For a unidirectional data lane or unidirectional control lane, only one pair of differential signal lines is used to constitute a logical unidirectional lane for transmitting unidirectional data signals or control commands, or multiple logical unidirectional lanes are bundled to increase the bandwidth as required. If the required bandwidth of the control signal is narrow, for example, the highest rate of the control signal is only several 100Mbps, only one pair of differential signal lines is enough, and it is not necessary to bundle multiple lanes.

Described below is an NP 32 provided in an embodiment of the present invention.

As shown in FIG. 3, the NP 32 transmits signals through a high-speed serial interface. As mentioned above, through the serial interface, the data transmission rate may be very high, and the number of interface signal lines may decrease. The small number of signal lines is conducive to PCB design, reduces the chip size, and facilitates PCB wiring. The increase of the interface rate is conducive to improving bandwidth.

Specifically, a parallel-to-serial converter is designed on the output end of the TCAM chip interface module, and a serial-to-parallel converter is designed on the input end. In this way, serial signals can be transmitted on the signal line.

The high-speed serial interface may include several lanes (as shown in FIG. 3, X planes ranging from lane 1 to lane X), and each lane sends and receives differential signals independently. One lane includes four signal lines, and each signal line sends and receives a pair of differential signals.

The data transmission through the NP 32 serial interface may adapt a proper coding method, such as 8b/10b.

Further, the clock may be embedded in the data stream sent from the output end, and the input end re-builds the receiving clock. Specifically, the clock may be embedded in the data stream sent from the output end, and the input end re-builds the receiving clock upon the received data stream. In this way, no dedicated clock line is required for transmitting clock signals, which simplifies the PCB design.

The serial interface of the NP 32 chip is capable of adjusting interface frequency. The user may configure the interface frequency flexibly as required, and select the number of lanes (X) applied. Especially, when the number of lanes (X) applied is small, the number of signal lines is further decreased.

For a bidirectional data lane, for example, lane 1 to lane X in FIG. 3, two pairs of unidirectional differential signal lines may constitute a logical lane, which implements data exchange between the TCAM and the NP 32. A chip supports bundling of multiple logical lanes to increase the interface bandwidth. Further, a timestamp is added into the data to solve data disorder and reduce the equal-length wiring requirements for differential signals, which further simplifies the PCB design. For a unidirectional data lane or unidirectional control lane, only one pair of differential signal lines is used to constitute a logical unidirectional lane for transmitting unidirectional data signals or control commands, or multiple logical unidirectional lanes are bundled to increase the bandwidth as required. If the control signal requires a narrow bandwidth, for example, the highest rate of the control signal is only several 100Mbps, only one pair of differential signal lines is enough, and it is not necessary to bundle multiple lanes.

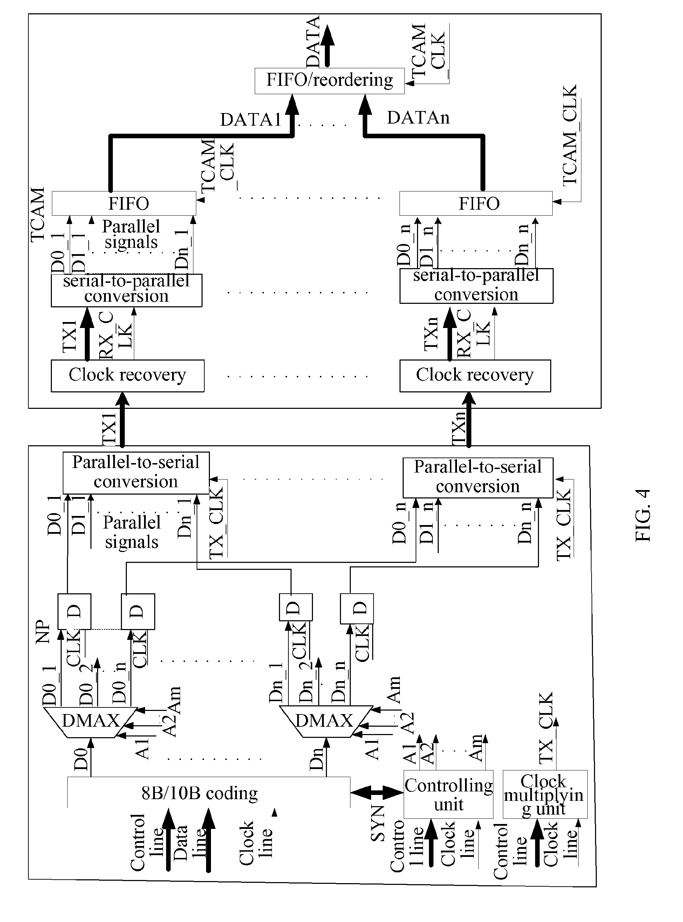

FIG. 4 is a schematic diagram of signal conversion in the direction from NP 32 to the TCAM.

As shown in FIG. 4, on the output end, the input data is encoded through 8B/10B, and n coded data are obtained, namely, D_0, ..., D_n. The n data are selectively transmitted through DMAX to the parallel-to-serial converter. Generally, the selective transmission may be performed through multiple DMAXs. Specifically, each DMAX is controlled by A1, A2, ..., and Am. For example, if the input of the DMAX is D0, the output of the DMAX is directed to one of the data in "D0_1, DO_2, ..., and D0_n" according to the combination of A1, A2, ..., and Am. Each of "D0_1, D0_2, ..., D0_n" is connected with a parallel-to-serial converter. The trigger D in FIG. 4 serves the purpose of time synchronization. Besides, multiple levels of triggers may be used to eliminate the metastable state of signals. Each parallel-to-serial converter is connected with a differential signal line in the transmitting direction. In this way, through setting of the value of A1, A2, ..., and Am of the DMAX control line, the parallel-to-serial converter to be used after the D0 undergoes the selective transmission of the DMAX is determined, and the subsequent TX line is determined. The values of A1, A2, ..., and Am may be set by the controlling unit in FIG. 4 through the input clock line and control line. It is worthy of attention that the controlling unit is synchronous to the 8B/10B coding unit. As shown in FIG. 4, an SYN line may be introduced into the two units to implement synchronization. Meanwhile, each parallel-to-serial converter is controlled by the clock signal after clock multiplication, for example, TX_CLK in FIG. 4. The TX_CLK is obtained after the clock undergoes the clock multiplying performed by the clock multiplying unit controlled by the control line. Each data among D1, D2, ..., and Dn is processed like D0 above. For the n coded data "D0, D1, ..., Dn", the parallel-to-serial converter reached by each of D0, D1, ..., and Dn may be set in the foregoing way. Therefore, the parallel-to-serial converter reached by each line of data encoded through 8B/10B may be controlled to decide the number of TX differential signal lines applied. For example, it is appropriate to let the n coded data "D0, D1, ..., and Dn" ultimately arrive at the first parallel-to-serial converter and the second parallel-to-serial converter in the NP 32 to fulfill the purpose of controlling use of the two parallel-to-serial converters. That is, only the TX differential signal lines corresponding to the two parallel-to-serial converters are applied. Each parallel-to-serial converter converts all input parallel data into serial signals so that the data can be sent out on the TX differential signal lines. Meanwhile, the number of the parallel-to-serial converters is controlled, which leads to change of the total bandwidth.

Besides, the clock frequency of TX_CLK may be adjusted through adjustment of the clock multiplying unit. The TX_CLK is connected with every parallel-to-serial converter so that the rate is configurable.

In conclusion, according to the actual bandwidth requirement, the differential pairs applied may be adjusted through increase or decrease of the differential pair signal lines applied and adjustment of the frequency of differential signals.

On the input end, on a TX differential signal line such as TX1, a clock recovering recovers the clock first. By using the recovered clock signals, a serial-to-parallel converting unit converts the received serial signals into parallel signals, namely, n lines of parallel data "D0_1, D1_1, ..., and Dn_1". Data is synchronized across clock domains through FIFO isolation between each differential pair interface and the system clock domain. In addition, flow control may be implemented through back pressure. Back pressure may be implemented in the FIFO, or through an out-band interface. The data processing on other differential signal lines is similar. Data disorder may occur between multiple differential signal lines. Therefore, data may be reordered through a level of FIFO after undergoing FIFO connected with multiple differential interfaces.

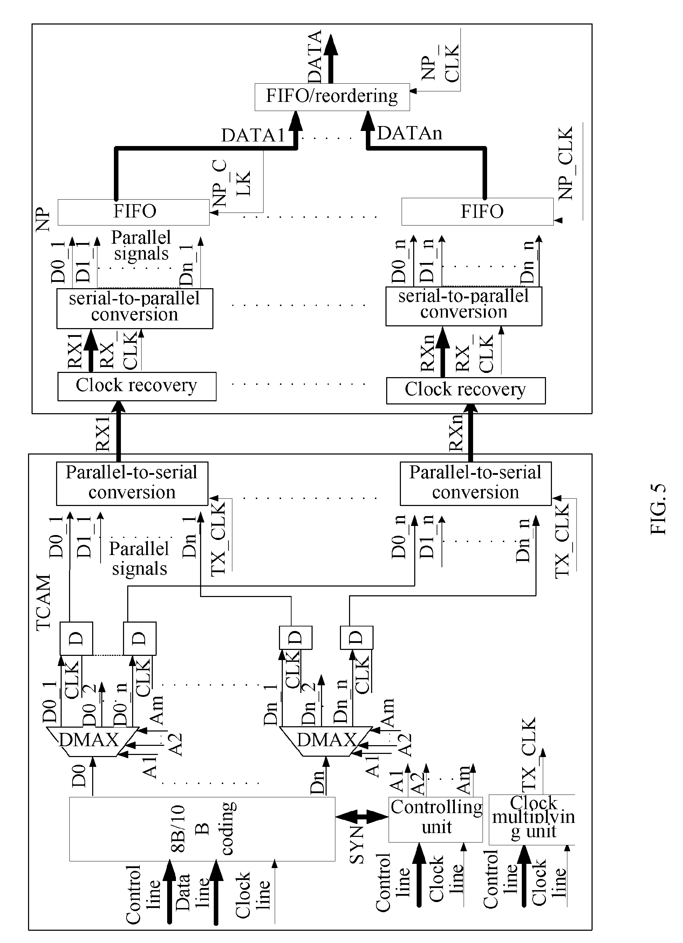

FIG. 5 is a schematic diagram of signal conversion in the direction from the TCAM to NP 32.

The principles of this schematic diagram are similar to the signal conversion principles in the direction from NP 32 to the TCAM, and are not repeated here any further.

A route lookup system is provided in an embodiment of the present invention. The route lookup system includes a TCAM 31 and an NP 32, and signals are transmitted between the TCAM 31 and the NP 32 through a high-speed serial interface.

In the foregoing system, the output end of the high-speed serial interface of the TCAM 31 includes a parallel-to-serial converter, and the input end of the high-speed serial interface of the TCAM 31 includes a serial-to-parallel converter; the output end of the high-speed serial interface of the NP 32 includes a parallel-to-serial converter, and the input end of the high-speed serial interface of the NP 32 includes a serial-to-parallel converter.

In the foregoing system, the high-speed serial interface includes at least one lane. Each lane transmits and receives differential signals independently. One pair of the four signal lines is configured to transmit differential signals and the other pair of the four signal lines is configured to receive differential signals.

In the foregoing system, the clock is embedded in the data stream sent from the output end, and the input end re-builds a receiving clock upon the received data stream.

In the foregoing system, the high-speed serial interface enables adjustment of the frequency.

In the foregoing system, for bidirectional data lanes, two pairs of unidirectional differential signal lines in opposite directions constitute a logical bidirectional lane.

In the foregoing system, two or more logical bidirectional lanes are bundled together.

In the foregoing system, a timestamp is added into the data transmitted through the high-speed data interface.

In the foregoing system, for unidirectional data lanes or unidirectional control lanes, one pair of differential signal lines constitutes a logical unidirectional lane.

In the foregoing system, two or more logical unidirectional lanes are bundled together.

Although the invention has been described through several preferred embodiments, the invention is not limited to such embodiments. It is apparent that those skilled in the art can make modifications and variations to the invention without departing from the spirit and scope of the invention. The invention is intended to cover the modifications and variations provided that they fall in the scope of protection defined by the following claims or their equivalents.

## Claims

1. A Ternary Content Addressable Memory (TCAM) (31), comprising:
a high-speed serial interface, wherein the TCAM (31) transmits signals through the high-speed serial interface.

2. The TCAM (31) of claim 1, wherein:
an output end of the high-speed serial interface of the TCAM (31) comprises a parallel-to-serial converter, and an input end of the high-speed serial interface of the TCAM (31)comprises a serial-to-parallel converter.

3. The TCAM (31) of claim 1, wherein:
the high-speed serial interface comprises at least one lane, and each of the at least one lane transmits and receives differential signals independently; and
each of the at least one lane comprises four signal lines, one pair of the four signal lines is configured to transmit differential signals and the other pair of the four signal lines is configured to receive differential signals.

4. The TCAM (31) of claim 2, wherein:
a clock is embedded in a data stream sent from the output end, and the input end re-builds a receiving clock upon receiving the data stream.

5. The TCAM (31) of claim 1, wherein:
the high-speed serial interface is capable of adjusting interface frequency.

6. The TCAM (31) of claim 3, wherein:
for bidirectional data lanes, two pairs of unidirectional differential signal lines in opposite directions constitute a logical bidirectional lane.

7. The TCAM (31) of claim 6, wherein:
two or more the logical bidirectional lanes are bundled together.

8. The TCAM (31) of claim 1, wherein:
a timestamp is added into data transmitted through the high-speed data interface.

9. The TCAM of claim 1, wherein:
for unidirectional data lanes or unidirectional control lanes, one pair of differential signal lines constitutes a logical unidirectional lane.

10. The TCAM (31) of claim 9, wherein:
two or more the logical unidirectional lanes are bundled together.

11. A Network Processor (NP) (32), comprising:
a high-speed serial interface, wherein the NP (32) transmits signals through the high-speed serial interface.

12. The NP (32) of claim 11, wherein:
an output end of the high-speed serial interface of the NP (32) comprises a parallel-to-serial converter, and an input end of the high-speed serial interface of the NP (32) comprises a serial-to-parallel converter.

13. The NP (32) of claim 11, wherein:
the high-speed serial interface comprises at least one lane, and each of the at least one lane transmits and receives differential signals independently; and
each of the at least one lane comprises four signal lines, and one pair of the four signal lines is configured to transmit differential signals and the other pair of the four signal lines is configured to receive differential signals.

14. The NP (32) of claim 12, wherein:
a clock is embedded in a data stream sent from the output end; and
the input end re-builds a receiving clock upon receiving the data stream.

15. The NP (32) of claim 11, wherein:
the high-speed serial interface is capable of adjusting interface frequency.

16. The NP (32) of claim 13, wherein:
for bidirectional data lanes, two pairs of unidirectional differential signal lines in opposite directions constitute a logical bidirectional lane.

17. The NP (32) of claim 16, wherein:
two or more the logical bidirectional lanes are bundled together.

18. The NP (32) of claim 11, wherein:
a timestamp is added into data transmitted through the a high-speed data interface.

19. The NP (32) of claim 11, wherein:
for unidirectional data lanes or unidirectional control lanes, one pair of differential signal lines constitutes a logical unidirectional lane.

20. The NP (32) of claim 19, wherein:
two or more the logical unidirectional lanes are bundled together.

21. A route lookup system, comprising a Ternary Content Addressable Memory (TCAM) (31) according to any one of claims 1-10 and a Network Processor (NP) (32) according to any one of claims 11-20.
